# EUROPEAN PATENT APPLICATION

(11) **EP 1 557 783 A2**
(43) Date of publication of application: **27.07.2005**
(21) Application number: 04025518.4
(22) Date of filing: 27.10.2004
(51) Int. Cl.: G06K 9/32, G06F 17/30

(54) **Image processing apparatus, image processing method, image processing program, and information record medium storing program**

(30) Priority: 06.11.2003 JP 2003376457
(71) Applicant: Pioneer Corporation, Meguro-ku, Tokyo (JP)
(72) Inventor: Horiuchi, Naoaki, c/o Pioneer corporation, Tsurugashima-shi Saitama-ken (JP)
(74) Representative: Tappe, Hartmut

(57) **Abstract**

A data record-reproduce device (100) includes a reception unit (101) for obtaining contents data, a telop extraction unit (205) for extracting telop from video data, a changed portion detection unit (206) for detecting a changed portion of telop; a changed point detection unit (207) for detecting a changed point of a changed portion, a retrieval key generation unit (208) for generating a retrieval key using an image of a changed portion, a data setting unit (209) for setting retrieval data indicating the correspondence between a retrieval key and a changed point, an operation unit (108) used in selecting a retrieval key, a retrieval control unit (211) for retrieving a changed point corresponding to a retrieval key based on retrieval data, and a reproduction control unit (203) for reproducing contents data using a changed point as a starting point.

## Description

### BACKGROUND OF THE INVENTION

### 1. Field of the Invention

The present invention relates to a technological field of the image processing apparatus for recording contents data and reproducing the recorded contents data.

### 2. Related Art

Recently, with a data record-reproduce device for recording contents data provided by a broadcast on television and reproducing the recorded contents data becoming widespread, a data record-reproduce device for retrieving a desired scene in contents data and reproducing contents data from the retrieved scene without reproducing the recorded contents data from the start to the end has been proposed.

With the conventional data record-reproduce device, the image data indicating the information such as the progress of a competition, the introduction of a player, etc. (hereinafter referred to as "telop") is detected from the contents data relating to satellite broadcasting of, for example, baseball, soccer, tennis, boxing, etc., and the position of the detected telop is used as a target to be detected, thereby retrieving a desired scene from the contents data (see reference USP 6243419 B1).

However, with the conventional data record-reproduce device described above, only the positions of telop are retrieved and the contents of telop are not retrieved. Therefore, retrieving mode, in which information concerning competition telop is used for retreiving key , is not realized and a characteristic scene in the contents data can not be quickly and correctly retrieved.

### SUMMARY OF THE INVENTION

The above object of the present invention can be achieved by an image processing apparatus of the present invention. The image processing apparatus is provided with: an obtaining device which obtains contents data containing video data including main image data making progress with lapse of time and sub-image data which is superposed on the main image data and changes with progress of the main image data; an extraction device which extracts the sub-image data from the video data; a detection device which detects a changed portion of the extracted sub-image data and a changed point of the changed portion; a generation device which generates a retrieval key using an image of the detected changed portion; and a setting device which sets retrieval data indicating a correspondence between the generated retrieval key and the detected changed point.

According to the present invention, the retrieval key generation unit generates a retrieval key using an image of a changed portion of telop, and sets retrieval data indicating the correspondence between the generated retrieval key and detected changed point. Therefore, the contents of telop can be processed as a retrieval target, and a characteristic scene in the contents data can be quickly and correctly retrieved.

In one aspect of the present invention can be achieved by the image processing apparatus of the present invention. The image processing apparatus is provided with: an obtaining device which obtains contents data containing video data including main image data making progress with lapse of time and sub-image data which is superposed on the main image data and changes with progress of the main image data; a setting device which sets retrieval data indicating a correspondence between a retrieval key generated using an image of a changed portion of the sub-image data and a changed point of the changed portion of the sub-image data; a selection device which selects the generated retrieval key; a retrieval device which retrieves a changed point of the changed portion corresponding to the selected retrieval key based on the set retrieval data; and a reproduction device which reproduces the contents data using the retrieved changed point as a starting point.

According to the present invention, the retrieval key generation unit generates a retrieval key using an image of a changed portion of telop, and sets retrieval data indicating the correspondence between the generated retrieval key and detected changed point. Therefore, when a retrieval key is selected, a changed point corresponding to the retrieval key is retrieved as a starting point, and contents data is reproduced from the starting point. The contents of telop can be processed as a retrieval target, and a characteristic scene in the contents data can be quickly and correctly retrieved.

In another aspect of the present invention can be achieved by the image processing apparatus of the present invention. The image processing apparatus, is provided with: an obtaining device which obtains contents data containing video data including main image data making progress with lapse of time and sub-image data which is superposed on the main image data and changes with progress of the main image data; an extraction device which extracts the sub-image data from the video data; a detection device which detects a changed portion of the extracted sub-image data and a changed point of the changed portion; a generation device which generates a retrieval key using an image of the detected changed portion; a setting device which sets retrieval data indicating a correspondence between the generated retrieval key and the detected changed point; a selection device which selects the generated retrieval key; a retrieval device which retrieves a changed point of the changed portion corresponding to the selected retrieval key based on the set retrieval data; and a reproduction device which reproduces the contents data using the retrieved changed point as a starting point.

According to the present invention, the retrieval key generation unit generates a retrieval key using an image of a changed portion of telop, and sets retrieval data indicating the correspondence between the generated retrieval key and detected changed point. Therefore, when a retrieval key is selected, a changed point corresponding to the retrieval key is retrieved as a starting point, and contents data is reproduced from the starting point. Therefore, the contents of telop can be processed as a retrieval target, and a characteristic scene in the contents data can be quickly and correctly retrieved. As a result, since the retrieval key is configured by an image of the changed portion of telop, it is not necessary to perform character recognition when a retrieval key is generated, thereby preventing incorrect recognition of a user and quickly and correctly performing reproduction from any user-desired point of contents data.

In further aspect of the present invention can be achieved by the image processing apparatus of the present invention. The image processing apparatus of the present invention is further provided with a display device which displays the generated retrieval key.

According to the present invention, the data record-reproduce device has the configuration including the display control unit for displaying a generated retrieval key, the video output unit 104, and the monitor. With the above-mentioned configuration, an image of a changed portion of telop is displayed on the monitor as a retrieval key. Therefore, an immediately comprehensible menu screen can be presented to a user.

In further aspect of the present invention can be achieved by the image processing apparatus of the present invention. The image processing apparatus of the present invention is further provided with a adding device which adds progress data indicating a correspondence between the generated retrieval key and the progress of the main image data to the set retrieval data.

According to the present invention, the data record-reproduce device can be provided with an addition control unit as an adding device for adding progress data indicating the correspondence between a generated retrieval key and the progress of a competition image to the retrieval data set. When contents data relates to satellite broadcasting of baseball, when the progress is made by one in the changed portion of telop, the changed portion of offense and defense is assumed to make two changes. When such contents data relates to the satellite broadcasting of baseball, and the offense and defense are switched in the changed portion of the telop data, the out count is assumed to make two changes. Therefore, the addition control unit stores the progress data, and the changed portion detection unit reads the progress data when the changed portion of telop is detected, the changed portion detection unit recognizes the meaning of the changed portion, and outputs the information about the meaning of the changed portion to the retrieval key generation unit through the changed point detection unit. The retrieval key generation unit generates a retrieval key according to the information about the meaning of the changed portion to display the information about the meaning of the changed portion when the retrieval key is displayed. A retrieval key can be displayed based on the meaning of the retrieval key by setting a meaning in advance when the retrieval key is generated using the feature of telop, thereby providing a more operable menu screen for a user.

The above object of the present invention can be achieved by an image processing method of the present invention. The image processing method is provided with: an obtaining step of obtaining contents data containing video data including main image data making progress with lapse of time and sub-image data which is superposed on the main image data and changes with progress of the main image data; an extracting step of extracting the sub-image data from the video data; a detecting step of detecting a changed portion of the extracted sub-image data and a changed point of the changed portion; a generating step of generating a retrieval key using an image of the detected changed portion; and a setting step of setting retrieval data indicating a correspondence between the generated retrieval key and the detected changed point.

According to the present invention, the retrieval key generation unit generates a retrieval key using an image of a changed portion of telop, and sets retrieval data indicating the correspondence between the generated retrieval key and detected changed point. Therefore, the contents of telop can be processed as a retrieval target, and a characteristic scene in the contents data can be quickly and correctly retrieved.

The above obj ect of the present invention can be achieved by an information record medium of the present invention. The information record medium having an image processing program recorded thereon to be readable by a computer, the image processing program causing the computer to function as: an obtaining device which obtains contents data containing video data including main image data making progress with lapse of time and sub-image data which is superposed on the main image data and changes with progress of the main image data; an extraction device which extracts the sub-image data from the video data; a detection device which detects a changed portion of the extracted sub-image data and a changed point of the changed portion; a generation device which generates a retrieval key using an image of the detected changed portion; and a setting device which sets retrieval data indicating a correspondence between the generated retrieval key and the detected changed point.

According to the present invention, the retrieval key generation unit generates a retrieval key using an image of a changed portion of telop, and sets retrieval data indicating the correspondence between the generated retrieval key and detected changed point. Therefore, the contents of telop can be processed as a retrieval target, and a characteristic scene in the contents data can be quickly and correctly retrieved.

The above obj ect of the present invention can be achieved by an image processing media of the present invention. The image processing program, the program making a computer function as: an obtaining device which obtains contents data containing video data including main image data making progress with lapse of time and sub-image data which is superposed on the main image data and changes with progress of the main image data; an extraction device which extracts the sub-image data from the video data; a detection device which detects a changed portion of the extracted sub-image data and a changed point of the changed portion; a generation device which generates a retrieval key using an image of the detected changed portion; and a setting device which sets retrieval data indicating a correspondence between the generated retrieval key and the detected changed point.

According to the present invention, the retrieval key generation unit generates a retrieval key using an image of a changed portion of telop, and sets retrieval data indicating the correspondence between the generated retrieval key and detected changed point. Therefore, the contents of telop can be processed as a retrieval target, and a characteristic scene in the contents data can be quickly and correctly retrieved.

### BRIEF DESCRIPTION OF THE DRAWINGS

FIG.1 is a block diagram showing the configuration of the data record-reproduce device according to an embodiment of the present invention;
FIG.2 is a block diagram showing the configuration of the important portion of the data record-reproduce device shown in FIG. 1;
FIG.3 shows an example of telop extracted by the data record-reproduce device shown in FIG. 1;
FIG.4 shows an example of a changed portion detected by the data record-reproduce device shown in FIG. 1;
FIG.5 shows an example of retrieval data set by the data record-reproduce device shown in FIG. 1;
FIG.6 shows an example of a menu image generated by the data record-reproduce device shown in FIG. 1;
FIG. 7 is a flowchart showing the retrieval data setting process of the data record-reproduce device shown in FIG. 1; and
FIG.8 is a block diagram showing the configuration of the important portion of the data record-reproduce device shown in FIG. 1.

### DETAILED DESCRIPTION OF THE PREFERRED EMBODIMENTS

The best mode for embodying the present invention is described below by referring to the attached drawings. The embodiments explained below are those in which the image processing apparatus according to the present invention is applied to the data record-reproduce device.

Practically, the data record-reproduce device according to the present embodiment records contents data provided by a broadcast on television, and reproduces the recorded contents data. The data record-reproduce device retrieves a characteristic scene in the recorded contents data, and reproduces the contents data from the retrieved scene.

In the present embodiment, the contents data relates to satellite broadcasting of sports such as baseball, soccer, tennis, boxing, etc., and contains video data and audio data.

The video data is configured by main image data which makes progress with the lapse of time, and sub-image data which changes depending on the progress of the main image data. That is, the main image data is image data showing a competition itself (hereinafter referred to as a "competition image"), and the sub-image data is configured by images of a character, a symbol, etc., and is image data indicating the information about a competition such as the progress of a competition, the introduction of a player, etc. (hereinafter referred to as "telop").

For example, when the contents data relate to the satellite broadcasting of baseball, the telop presents the information about the scores of the teams, the progress of offense and defense, etc. Therefore, when the telop changes, it often indicates a characteristic point such as the time when a score is marked, the offense and defense sides change, etc. Then, the data record-reproduce device according to the present embodiment retrieves a characteristic scene in the contents data using the image of a changed portion of telop.

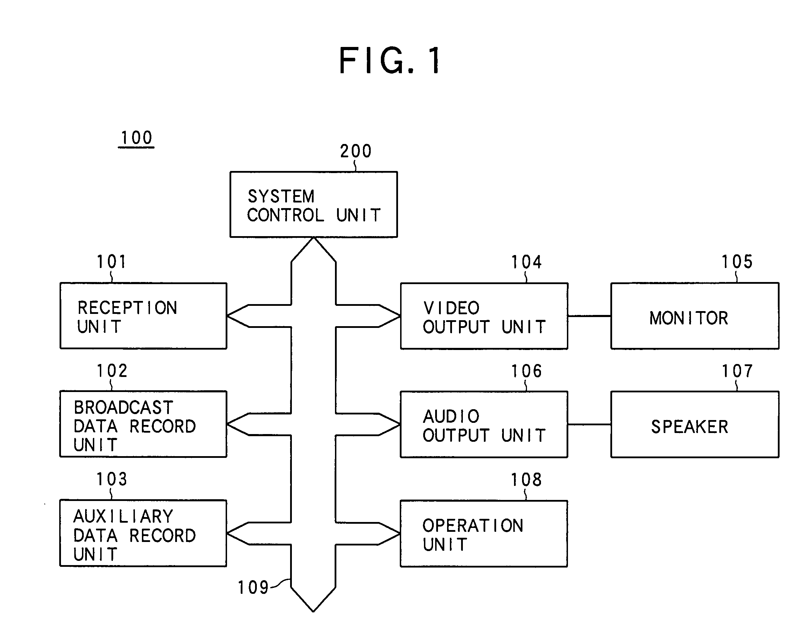

The configuration of the data record-reproduce device according to the present embodiment is explained below by referring to FIGS. 1 to 6.

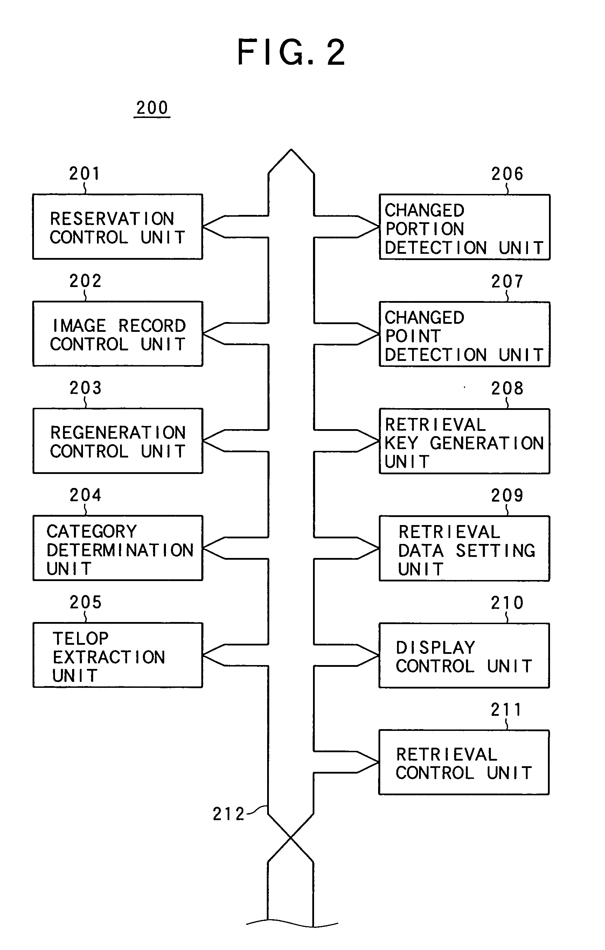

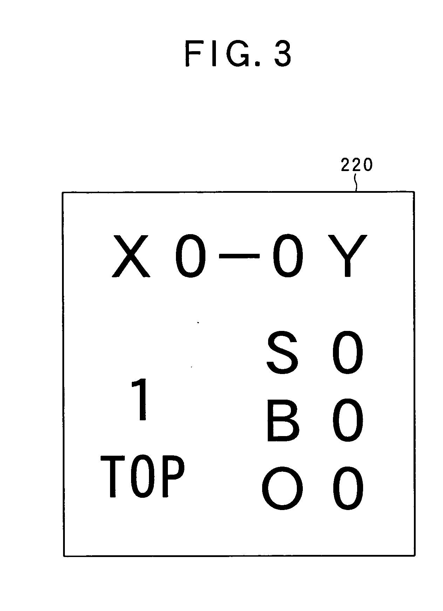

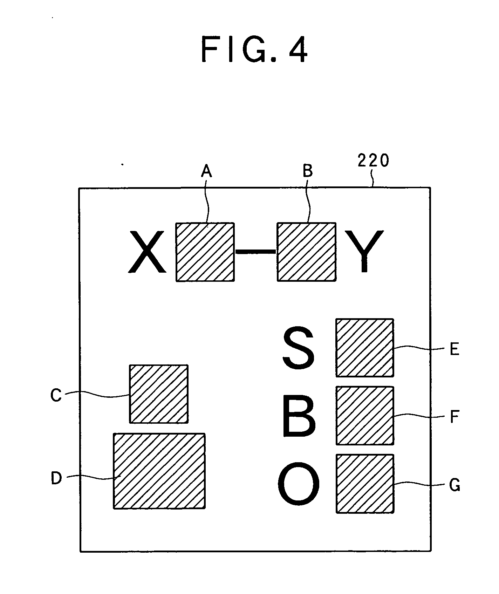

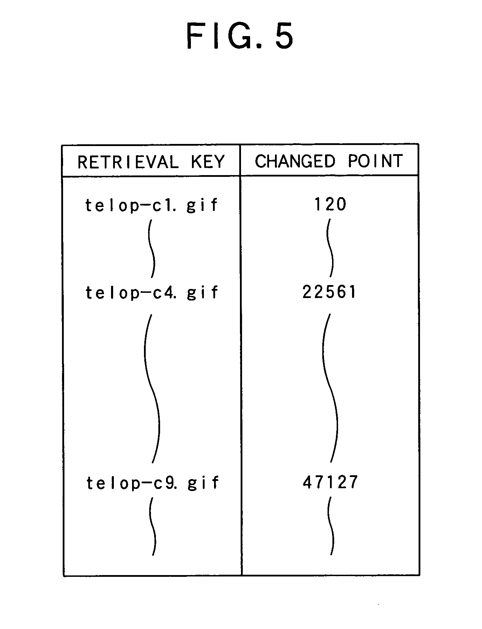

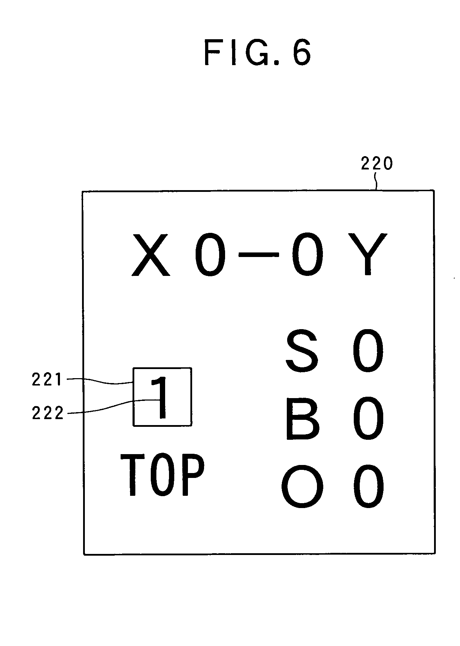

FIG. 1 is a block diagram showing the configuration of the data record-reproduce device according to the present embodiment. FIG. 2 is a block diagram of the configuration of the important part of the data record-reproduce device shown in FIG. 1. FIG. 3 shows an example of the telop extracted by the data record-reproduce device shown in FIG. 1. FIG. 4 shows an example of the changed portion detected by the data record-reproduce device shown in FIG. 1. FIG. 5 shows an example of the retrieval data set by the data record-reproduce device shown in FIG. 1. FIG. 6 shows an example of a menu image generated by the data record-reproduce device shown in FIG. 1.

A data record-reproduce device 100 according to the present embodiment comprises a reception unit 101, a broadcast data record unit 102, a auxiliary data record unit 103, a video output unit 104, a monitor 105, an audio output unit 106, a speaker 107, an operation unit 108, and a system control unit 200. Each unit is interconnected via a data bus 109 as shown in FIG. 1.

The reception unit 101 receives a broadcast wave from a predetermined broadcasting station at a predetermined time and date for recording according to a control signal output from a image record control unit 202 described below, and generates broadcast data by demodulating the received broadcast wave. The reception unit 101 outputs the generated broadcast data to the system control unit 200.

For example, the reception unit 101 according to the present embodiment configures a obtaining device according to the present invention.

For example, when receiving a BS (broadcasting satellite) digital broadcast or a CS (communication satellite) digital broadcast, and demodulating and generating broadcast data, the reception unit 101 separates the above-mentioned contents data from the attribute data indicating the attribute of the contents data, and outputs each of the contents data and the attribute data to the system control unit 200.

In addition to the contents data, the BS digital broadcast or the CS digital broadcast includes the attribute data referred to as program arrangement information (hereinafter referred to as "SI (service information) information") indicating the information such as the category, etc. of the contents data.

The broadcast data record unit 102 is configured by a record medium such as a hard disk, etc. The broadcast data record unit 102 records contents data comprising a program stream output from the image record control unit 202 described below.

The auxiliary data record unit 103 is configured by internal memory such as RAM (random access memory) , external memory such as an xD picture card (registered trade mark), etc. and a record medium such as an IC card including a SIM (subscriber identity module) , etc., and stores data relating to the record and reproduction of contents data such as reservation data, retrieval data, progress data, etc. output from each of the units described below.

The video output unit 104 generates a video signal by converting video data of an MPEG (moving picture experts group) format output from the reproduction control unit 203 described below, and controls the displaying operation of the monitor 105 according to the generated video signal.

Practically, the video output unit 104 temporarily stores the generated video signal in buffer memory, and outputs the stored video signal to the monitor 105 with a predetermined timing.

The video output unit 104 generates a video signal by converting display data output from a display control unit 210 described below, and outputs the generated video signal to the monitor 105.

After receiving a video signal, a monitor 105 displays an image according to the video signal output from the video output unit 104, and displays a menu image according to the video signal output from the video output unit 104. Furthermore, for example, the video output unit 104 and the monitor 105 according to the present embodiment configure the display device according to the present invention.

The audio output unit 106 generates an audio signal by converting audio data of an AC-3 (audio code number 3) format output from a reproduction control unit 203 described below, and controls the outputting operation of the speaker 107 according to the generated audio signal.

Practically, the audio output unit 106 temporarily stores the generated audio signal in buffer memory, and outputs the stored audio signal to the speaker 107 with a predetermined timing.

After receiving an audio signal, the speaker 107 outputs a sound according to the audio signal from the audio output unit 106.

The operation unit 108 is configured by an operation panel on which a plurality of buttons are arranged or a controller such as a remote controller for remotely operating an operation panel for directing the system control unit 200 to perform a user operation. The operation unit 108 is operated by a user and outputs an operation signal corresponding to the operation input to the system control unit 200.

When the menu image of the retrieval key is displayed on the monitor 105 described below, the operation unit 108 can perform the operation of selecting the retrieval key depending on the menu screen. When the user operates to select the retrieval key on the menu screen, the operation unit 108 outputs the operation signal corresponding to the menu screen to a retrieval control unit 211.

For example, the operation unit 108 configures the selection device according to the present invention.

The system control unit 200 is configured to include the CPU (central processing unit), ROM (read only memory), RAM (random access memory) , and controls the entire operations of the data record-reproduce device 100 by executing various programs according to the operation signal from the operation unit 108.

Practically, the system control unit 200 comprises a reservation control unit 201, the image record control unit 202, the reproduction control unit 203, a category determination unit 204, a telop extraction unit 205, a changed portion detection unit 206, a changed point detection unit 207, a retrieval key generation unit 208, a data setting unit 209, the display control unit 210, and the retrieval control unit 211, and each unit is interconnected via a data bus 212.

The reservation control unit 201 sets reservation data according to an operation signal from the operation unit 108, and outputs the set reservation data to the auxiliary data record unit 103. The reservation data refers to the information for recording reservation of the contents data such as the recording date and time of the contents data, the broadcasting station of the contents data, etc.

The image record control unit 202 outputs to the reception unit 101 the control signal for control of the reception unit 101 based on the reservation data recorded on the auxiliary data record unit 103 when recording reservation is to be performed, and according to the operation signal from the operation unit 108 when recording is performed manually.

The reception unit 101 is controlled to receive a broadcast wave from a predetermined broadcasting station on a predetermined recording date and time, or the currently broadcast wave according to a control signal output from the image record control unit 202.

The image record control unit 202 converts video data contained in the contents data output from the reception unit 101 to an MPEG format, and converts the audio data contained in the contents data output from the reception unit 101 to the AC-3 format.

The image record control unit 202 generates a program stream from the video data in the MPEG format and the audio data in the AC-3 format, and outputs the generated program stream to the broadcast data record unit 102.

When recorded contents data is output to the monitor 105 and the speaker 107, the image record control unit 202 outputs the video data in the MPEG format and the audio data in the AC-3 format to the video output unit 104 and the audio output unit 106.

The reproduction control unit 203 reads the program stream recorded in the broadcast data record unit 102, and converts the read program stream to the video data in the MPEG format and the audio data in the AC-3 format. The reproduction control unit 203 outputs the converted video data to the video output unit 104 and outputs the converted audio data to the audio output unit 106. Thus, the reproduction control unit 203 reproduces the contents data recorded in the broadcast data record unit 102.

When the contents data is recorded in the broadcast data record unit 102, and the category determination unit 204 described below determines that the category of the contents data is sports, the reproduction control unit 203 performs the process of setting the retrieval key described below (hereinafter referred to as a "retrieval data setting process"). Therefore, it obtains the contents data in the format of the program stream recorded in the broadcast data record unit 102, converts the obtained program stream to video data, and outputs the converted video data to the telop extraction unit 205.

Then, the reproduction control unit 203 reproduces contents data recorded in the broadcast data record unit 102 using a changed point retrieved by the retrieval control unit 211 as a starting point when the reproduction is performed based on the retrieval data as described below, and performs reproduction in a retrieval key setting operation.

The reproduction control unit 203 according to the present embodiment configures the reproduction device according to the present invention.

For example, when the contents data relates to satellite broadcasting of baseball, and the frequency "9" is selected as the frequency C of offense and defense, the reproduction control unit 203 reproduces the contents data using the changed point "47127" corresponding to the image data "telop-c9.gif" as a starting point as shown in FIG. 5.

The category determination unit 204 extracts the EIT (event information table) information from the SI information contained in the attribute data output from the reception unit 101, and determines the category of the contents data recorded in the broadcast data record unit 102 according to the extracted EIT information.

Practically, the category determination unit 204 determines whether or not the category of the contents data is sports according to the extracted EIT information. When the category of the contents data is sports, the control signal indicating the determination result is output to the reproduction control unit 203 and the telop extraction unit 205.

When the telop extraction unit 205 receives a control signal indicating the determination result that the category of the contents data is sports, and receives the video data in the MPEG format output from the reproduction control unit 203, a video signal is generated by converting the input video data, and telop is extracted from the generated video signal.

Practically, the telop extraction unit 205 binarizes a video signal for each frame, and detects the edge of the telop, thereby extracting the telop having the value of 1, 2, or larger than 2 from the video signal.

For example, when the contents data relates to the satellite broadcasting of baseball, the telop extraction unit 205 extracts telop 220 indicating the information about a competition as shown in FIG. 3.

When the telop extraction unit 205 detects the edge of the telop, there is the condition that the edge stably appears among several consecutive frames forming video data. Thus, according to the present embodiment, the telop extraction unit 205 extracts the telop by detecting the edge of the telop. The telop can also be extracted by detecting the color distribution of a video signal.

The telop extraction unit 205 outputs a video signal of the extracted telop portion for each frame as telop data to the changed portion detection unit 206.

The changed portion detection unit 206 detects the telop extracted by the telop extraction unit 205, that is, the portion in which an image changes in the telop (hereinafter referred to as a "changed portion") based on the telop data for each input frame.

Practically, the changed portion detection unit 206 detects the changed portion having the value of 1, 2, or a value larger than 2 by detecting a brightness change of a portion in the telop indicated by the telop data from each frame.

For example, when the contents data relates to satellite broadcasting of baseball, the changed portion detection unit 206 detects the changed portions of the scores A and B of both teams, the frequency C of offense and defense, the side D of offense or defense, the count E of strike, the count F of ball, and the count G of out as shown in FIG. 4.

When the changed portion detection unit 206 detects the brightness change of telop as described above, as with the telop extraction unit 205, there is the condition that the same brightness can be maintained among several consecutive frames forming telop data. As described above, according to the present embodiment, the changed portion detection unit 206 detects the changed portion by detecting the brightness change of the telop, but can be configured to detect the changed portion by detecting a color change of telop.

The changed portion detection unit 206 outputs the position data indicating the arrangement in the telop of each detected changed portion and the telop data for each frame to the changed point detection unit 207.

The changed point detection unit 207 detects the time point (hereinafter referred to as a "changed point") in which an image has changed in each changed portion in the telop portion based on the position data of a changed portion detected by the changed portion detection unit 206 and the telop data for each frame.

Practically, the changed point detection unit 207 detects the point in which a portion indicated by the position data has been changed using the value of the frame when an image of the changed portion has changed as a changed point based on the telop data for each frame.

The changed point detection unit 207 outputs the value of the frame indicating the time point in which a changed portion has changed and the image data which is the telop data at the changed point to the reproduction control unit 203.

For example, the telop extraction unit 205 configures the extraction device according to the present invention, and the changed portion detection unit 206 and the changed point detection unit 207 configure the detection device.

The retrieval key generation unit 208 generates a retrieval key using the value of the frame indicating the point in which the changed portion has been detected by the changed portion detection unit 206 and the image data which is the telop data at the changed point.

Practically, the retrieval key generation unit 208 segments an image of the changed portion from the telop data at the point for each changed point detected by the changed point detection unit 207, generates an retrieval key using the segmented image, and detects the value of the frame from which the image of the changed portion has been segmented.

For example, when the contents data relates to the satellite broadcasting of baseball, the frequency C of offense and defense is detected using nine types of images indicating "1" to "9" as the changed portion, and the value of the frame at the point at which the changed portion has been changed and the image data at the changed point are input. Therefore, the retrieval key generation unit 208 generates the retrieval key of nine types of images indicating "1", "2", "3", "4", "5", "6", "7", "8", and "9".

For example, the retrieval key generation unit 208 according to the present embodiment configures the generation device according to the present invention.

The retrieval key generation unit 208 outputs the image data of the generated retrieval key and the number of frames of the changed point of each piece of image data to the data setting unit 209.

The data setting unit 209 sets retrieval data indicating the correspondence between the retrieval key and the changed point of the retrieval key based on the image data of the retrieval key generated by the retrieval key generation unit 208 and the number of frames of each piece of image data, and outputs the set retrieval data to the auxiliary data record unit 103.

Practically, the data setting unit 209 generates the table indicating the correspondence between the image data indicating the retrieval key and the frame indicating the changed point as shown in FIG. 5, and outputs the generated table of data to the auxiliary data record unit 103.

For example, when the contents data relates to the satellite broadcasting of baseball, and the frequency C of offense and defense changes from "8" to "9", the data setting unit 209 sets the retrieval data such that the image data "telop-c9.gif" indicating the image "9" corresponds to the frame "47127" which has changed from the image "8" to the image "9", that is, generates a table indicating the correspondence between the image data "telop-c9.gif" indicating the retrieval key and the frame "47127" indicating the changed point.

For example, the data setting unit 209 according to the present embodiment configures the setting device according to the present invention.

The display control unit 210 generates a menu image indicating the reproduction starting point using the retrieval key by combining the retrieval key generated by the retrieval key generation unit 208 with the telop extracted by the telop extraction unit 205, and outputs the display data indicating the generated menu image to the video output unit 104.

For example, if the contents data relates to the satellite broadcasting of baseball, and the frequency C of offense and defense refers to the retrieval key, the display control unit 210 displays an emphasized changed portion 221 of the telop 220 as shown in FIG. 6, and a menu image is generated with the emphasized changed portion 221 combined with a retrieval key 222.

A menu image can be represented in a toggle format, that is, represented by sequentially displaying 9 types of images which are retrieval keys, or can be represented in a menu format, that is, represented in a row of nine images which are retrieval keys.

The retrieval control unit 211 recognizes a retrieval key selected according to the operation signal from the operation unit 108, and retrieves the changed point corresponding to the recognized retrieval key based on the retrieval data recorded in the auxiliary data record unit 103, and outputs the information about the frame indicating the corresponding changed point to the reproduction control unit 203.

For example, when the contents data relates to the satellite broadcasting of baseball, and the "9" is selected as the frequency C of offense and defense, the retrieval control unit 211 recognizes "telop-c9.gif" as image data indicating the retrieval key as shown in FIG. 5, and the "47127" is retrieved as a frame indicating the changed point.

For example, the retrieval control unit 211 according to the present embodiment configures the retrieval device according to the present invention.

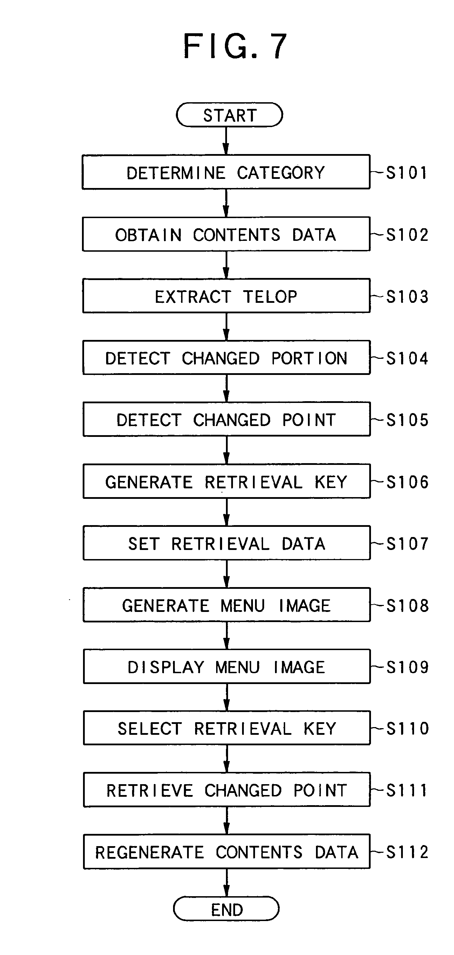

The operation of the data record-reproduce device according to the present embodiment is explained by referring to FIG. 7. FIG. 7 is a flowchart of the operation showing the retrieval data setting process of the data record-reproduce device according to the present embodiment.

In the present operation, the broadcast data record unit 102 records the broadcast data as a program stream in which the retrieval data is to be set, and the SI information about the broadcast data is assumed to be recorded as associated with the broadcast data.

When the record of the contents data in the broadcast data record unit 102 terminates, the category determination unit 204 determines the category of the contents data according to the EIT information (step S101), and outputs the information that the category of the contents data is sports to the reproduction control unit 203 and the telop extraction unit 205, or if the information that the retrieval data is set is input to the operation unit 108, then the operation unit 108 outputs the operation signal corresponding to the information that the retrieval data is set to the reproduction control unit 203 and the telop extraction unit 205.

When the information that the retrieval data is set is input to the reproduction control unit 203, the reproduction control unit 203 obtains a program stream in the contents data to be treated in the retrieval data setting process from the broadcast data record unit 102, converts the obtained program stream to video data, and outputs the converted video data to the telop extraction unit 205 (step S102).

Then, if the information that the retrieval data is set is input to the telop extraction unit 205, and video data is input, then the telop extraction unit 205 extracts telop from the input video data, and outputs a video signal of the extracted telop portion as telop data for each frame to the changed portion detection unit 206 (step S103).

Practically, the telop extraction unit 205 generates a video signal by converting the video data in the MPEG format output from the reproduction control unit 203 as described above, extracts the telop from the generated video signal, and outputs the video signal of the extracted telop portion as telop data for each frame to the changed portion detection unit 206.

For example, when the contents data relates to the satellite broadcasting of baseball, the telop extraction unit 205 extracts the telop 220 indicating the information about the competition.

When telop data for each frame is input to the changed portion detection unit 206, the changed portion detection unit 206 detects a changed portion of telop based on the input telop data, and outputs the position data indicating the position in the telop of the detected changed portion and the telop data for each frame to the changed point detection unit 207 (step S104).

For example, when the contents data relates to the satellite broadcasting of baseball, the changed portion detection unit 206 detects the changed portions of the scores A and B of both teams, the frequency C of offense and defense, the side D of offense or defense, the count E of strike, the count F of ball, and the count G of out as described above.

When the position data indicating the position in the telop of each changed portion and the telop data for each frame are input to the changed point detection unit 207, the changed point detection unit 207 detects a changed point of a changed portion based on the input position data and telop data, and outputs the value of the frame indicating the point of the change of the changed portion and the image data which is the telop data at the changed point to the reproduction control unit 203 (step S105).

Practically, as described above, the changed point detection unit 207 detects the point when a portion indicated by the position data indicates a change based on the telop data for each frame using the value of the frame when the image of a changed portion indicates a change as a changed point.

When the value of the frame indicating the point when the changed portion indicates a change and the image data which is the telop data in the changed point are input to the retrieval key generation unit 208, the retrieval key generation unit 208 generates a retrieval key based on the input value of the frame and image data of the changed point, and outputs the image data of the generated retrieval key and the frame value of the changed point of each piece of image data to the data setting unit 209 (step S106).

Practically, the retrieval key generation unit 208 segments an image of a changed portion from the telop data for each changed point as described above, and generates a retrieval key using the segmented image.

For example, if the contents data relates to the satellite broadcasting of baseball, the retrieval key generation unit 208 generates a retrieval key using nine types of images indicating "1", "2", "3", "4", "5", "6", "7", "8", and "9" on the frequency C of offense and defense as described above.

When the image data of the retrieval key and the frame number at the changed point of each piece of image data are input to the data setting unit 209, the data setting unit 209 sets the retrieval data indicating the correspondence between the retrieval key generated by the retrieval key generation unit 208 and the changed point detected by the changedpoint detection unit 207, and outputs the set retrieval data to the auxiliary data record unit 103 (step S107).

For example, when the contents data relates to the satellite broadcasting of baseball, and the frequency C of offense and defense changes from "8" to "9", the data setting unit 209 sets the retrieval data such that the image data "telop-c9.gif" indicating the image "9" corresponds to the frame "47127" which has changed from the image "8" to the image "9".

Then, the display control unit 210 combines the retrieval key generated by the retrieval key generation unit 208 with the telop extracted by the telop extraction unit 205, thereby generating a menu image indicating a reproduction starting point by the retrieval key and outputs the display data indicating the generated menu image to the video output unit 104 (step S108).

For example, if the contents data relates to the satellite broadcasting of baseball, and the frequency C of offense and defense refers to the retrieval key, the display control unit 210 displays the emphasized changed portion 221 of the telop 220 as described above, and a menu image is generated with the emphasized changed portion 221 combined with the retrieval key 222.

Then, the video output unit 104 converts display data output from the display control unit 210 and generates a video signal, outputs the generated video signal to the monitor 105, and displays the menu image on the monitor 105 depending on the generated video signal (step S109).

At this time, the display control unit 210 outputs the information to the retrieval control unit 211 that the display data indicating a menu image is output to the video output unit 104, and allows the retrieval control unit 211 to wait for an operation input by a user using the operation unit 108.

When the user operates the operation unit 108 to select a retrieval key from the menu image displayed on the monitor 105, the operation unit 108 outputs an operation signal corresponding to the operation input to the retrieval control unit 211 (step S110).

When an operation signal corresponding to the operation input is input to the retrieval control unit 211, the retrieval control unit 211 recognizes the selected retrieval key depending on the operation signal from the operation unit 108, retrieves the changed point corresponding to the recognized retrieval key based on the retrieval data recorded in the auxiliary data record unit 103, and outputs the retrieval result, that is, the information about the frame at the changed point at which reproduction is to be started to the reproduction control unit 203 (step S111).

For example, when the contents data relates to the satellite broadcasting of baseball and "9" is selected as the frequency C of offense and defense, the retrieval control unit 211 recognizes "telop-c9.gif" as image data indicating the retrieval key as described above, and retrieves "47127" as the frame indicating a changed point.

Finally, when the information about the frame of a changed point at which reproduction is to be started is input to the reproduction control unit 203, the reproduction control unit 203 starts reproduction of contents data recorded in the broadcast data record unit 102 using the input frame information as a starting point (step S112), thereby terminating the operation.

For example, when the contents data relates to the satellite broadcasting of baseball and "9" is selected as the frequency C of offense and defense, the reproduction control unit 203 reproduces the contents data using as a starting point the changed point "47127" corresponding to the image data "telop-c9.gif" as described above.

As explained above, according to the present embodiment, the data record-reproduce device 100 comprises: the reception unit 101 for obtaining contents data including video data configured by a competition image which makes progress with the lapse of time and telop which is superposed on the competition image and changes with the progress of the competition image; the telop extraction unit 205 for extracting telop from video data; the changed portion detection unit 206 for detecting the changed portion of the extracted telop; the changed point detection unit 207 for detecting a changed point of a changed portion; the retrieval key generation unit 208 for generating a retrieval key using an image of a detected changed portion; a data setting unit 209 for setting retrieval data indicating the correspondence between the generated retrieval key and the detected changed point; the operation unit 108 used in selecting a generated retrieval key; the retrieval control unit 211 for retrieving a changed point of a changed portion corresponding to a selected retrieval key based on the set retrieval data; and the reproduction control unit 203 for reproducing contents data using a retrieved changed point as a starting point.

With the above-mentioned configuration, the retrieval key generation unit 208 generates a retrieval key using an image of a changed portion of telop, and sets retrieval data indicating the correspondence between the generated retrieval key and detected changed point.

Therefore, according to the present embodiment, when a retrieval key is selected, a changed point corresponding to the retrieval key is retrieved as a starting point, and contents data is reproduced from the starting point. Therefore, the contents of telop can be processed as a retrieval target, and a characteristic scene in the contents data can be quickly and correctly retrieved.

As a result, since the retrieval key is configured by an image of the changed portion of telop, it is not necessary to perform character recognition when a retrieval key is generated, thereby preventing incorrect recognition of a user and quickly and correctly performing reproduction from any user-desired point of contents data.

According to the present embodiment, the data record-reproduce device 100 has the configuration including the display control unit 210 for displaying a generated retrieval key, the video output unit 104, and the monitor 105.

With the above-mentioned configuration, according to the present embodiment, an image of a changed portion of telop is displayed on the monitor 105 as a retrieval key. Therefore, an immediately comprehensible menu screen can be presented to a user.

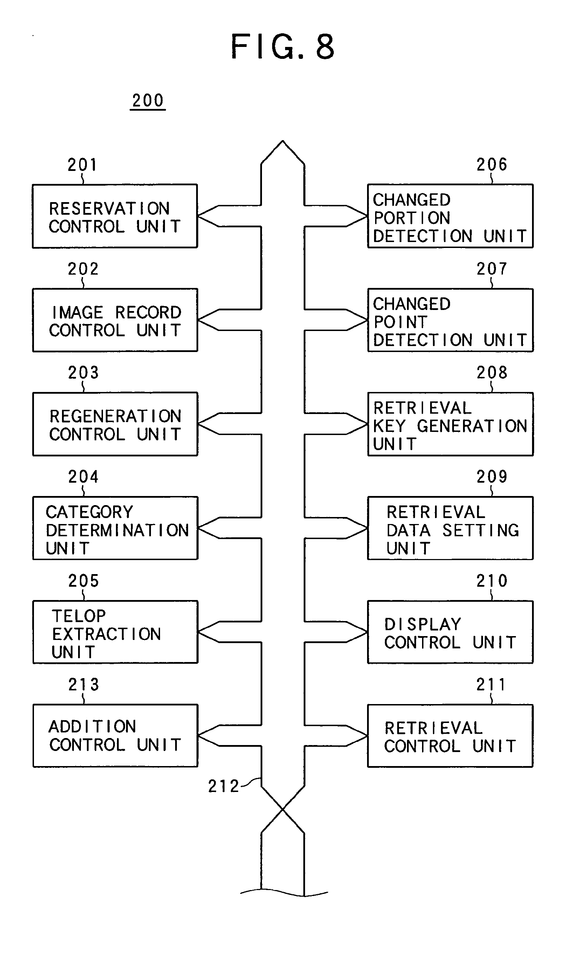

In the present embodiment, the data record-reproduce device 100 can comprise in the system control unit 200 the addition control unit 213 as an adding device for adding progress data indicating the correspondence between a generated retrieval key and the progress of a competition image to the retrieval data set as mentioned above as shown in FIG. 8.

For example, when contents data relates to satellite broadcasting of baseball, when the progress is made by one in the changed portion of telop, the changed portion of offense and defense is assumed to make two changes. When such contents data relates to the satellite broadcasting of baseball, and the offense and defense are switched in the changed portion of the telop data, the out count is assumed to make two changes.

Therefore, the addition control unit 213 stores the progress data, and the changed portion detection unit 206 reads the progress data when the changed portion of telop is detected, the changed portion detection unit 206 recognizes the meaning of the changed portion, and outputs the information about the meaning of the changed portion to the retrieval key generation unit 208 through the changed point detection unit 207.

In this case, the retrieval key generation unit 208 generates a retrieval key according to the information about the meaning of the changed portion to display the information about the meaning of the changed portion when the retrieval key is displayed.

With the configuration, according to the present embodiment, a retrieval key can be displayed based on the meaning of the retrieval key by setting a meaning in advance when the retrieval key is generated using the feature of telop, thereby providing a more operable menu screen for a user.

In the present embodiment, the system control unit 200 comprises the reservation control unit 201, the image record control unit 202, the reproduction control unit 203, the category determination unit 204, the telop extraction unit 205, the changed portion detection unit 206, the changed point detection unit 207, the retrieval key generation unit 208, the data setting unit 209, the display control unit 210, the retrieval control unit 211, and the addition control unit 213. However, the present invention is not limited to this configuration, but each of the reservation control unit 201 through retrieval control unit 211, and the addition control unit 213 can be connected to the data bus 109 independent of the system control unit 200, and the operation can be controlled by the system control unit 200. Thus, the system control unit 200 can be simply configured.

According to the present embodiment, the above mentioned retrieval data setting process is performed by the data record-reproduce device 100, but the above mentioned retrieval data setting process can also be performed by a computer for reading a program stored in a record medium and regulating the above mentioned retrieval data setting process.

It should be understood that various alternatives to the embodiment of the invention described herein may be employed in practicing the invention. Thus, it is intended that the following claims define the scope of the invention and that methods and structures within the scope of these claims and their equivalents be covered thereby.

## Claims

1. An image processing apparatus (100), **characterized in that** the image processing apparatus comprises:
an obtaining device (101) which obtains contents data containing video data including main image data making progress with lapse of time and sub-image data which is superposed on the main image data and changes with progress of the main image data;
an extraction device (205) which extracts the sub-image data from the video data;
a detection device (206, 207) which detects a changed portion of the extracted sub-image data and a changed point of the changed portion;
a generation device (208) which generates a retrieval key using an image of the detected changed portion; and
a setting device (209) which sets retrieval data indicating a correspondence between the generated retrieval key and the detected changed point.

2. An image processing apparatus (100), **characterized in that** the image processing apparatus comprises:
an obtaining device (101) which obtains contents data containing video data including main image data making progress with lapse of time and sub-image data which is superposed on the main image data and changes with progress of the main image data;
a setting device (209) which sets retrieval data indicating a correspondence between a retrieval key generated using an image of a changed portion of the sub-image data and a changed point of the changed portion of the sub-image data;
a selection device (108) which selects the generated retrieval key;
a retrieval device (211) which retrieves a changed point of the changed portion corresponding to the selected retrieval key based on the set retrieval data; and
a reproduction device (203) which reproduces the contents data using the retrieved changed point as a starting point.

3. An image processing apparatus (100), **characterized in that** the image processing apparatus comprises:
an obtaining device (101) which obtains contents data containing video data including main image data making progress with lapse of time and sub-image data which is superposed on the main image data and changes with progress of the main image data;
an extraction device (205) which extracts the sub-image data from the video data;
a detection device (206, 207) which detects a changed portion of the extracted sub-image data and a changed point of the changed portion;
a generation device (208) which generates a retrieval key using an image of the detected changed portion;
a setting device (209) which sets retrieval data indicating a correspondence between the generated retrieval key and the detected changed point;
a selection device (108) which selects the generated retrieval key;
a retrieval device (211) which retrieves a changed point of the changed portion corresponding to the selected retrieval key based on the set retrieval data; and
a reproduction device (203) which reproduces the contents data using the retrieved changed point as a starting point.

4. The image processing apparatus according to any of claims 1 to 3, **characterized in that** the image processing apparatus further comprises
a display device (105) which displays the generated retrieval key.

5. The image processing apparatus according to any of claims 1 to 4, **characterized in that** the image processing apparatus further comprises
a adding device (213) which adds progress data indicating a correspondence between the generated retrieval key and the progress of the main image data to the set retrieval data.

6. An image processing method, **characterized in that** the image processing method comprises:
an obtaining step of obtaining contents data containing video data including main image data making progress with lapse of time and sub-image data which is superposed on the main image data and changes with progress of the main image data;
an extracting step of extracting the sub-image data from the video data;
a detecting step of detecting a changed portion of the extracted sub-image data and a changed point of the changed portion;
a generating step of generating a retrieval key using an image of the detected changed portion; and
a setting step of setting retrieval data indicating a correspondence between the generated retrieval key and the detected changed point.

7. An image processing method, **characterized in that** the image processing method comprises:
an obtaining step of obtaining contents data containing video data including main image data making progress with lapse of time and sub-image data which is superposed on the main image data and changes with progress of the main image data;
a setting step of setting retrieval data indicating a correspondence between a retrieval key generated using an image of a changed portion of the sub-image data and a changed point of the changed portion of the sub-image data;
a selecting step of selecting the generated retrieval key;
a retrieving step of retrieving a changed point of the changed portion corresponding to the selected retrieval key based on the set retrieval data; and
a reproducing step of reproducing the contents data using the retrieved changed point as a starting point.

8. An image processing method, **characterized in that** the image processing method comprises:
an obtaining step of obtaining contents data containing video data including main image data making progress with lapse of time and sub-image data which is superposed on the main image data and changes with progress of the main image data;
an extracting step of extracting the sub-image data from the video data;
a detection device for detecting a changed portion of the extracted sub-image data and a changed point of the changed portion;
a generating step of generating a retrieval key using an image of the detected changed portion;
a setting step of setting retrieval data indicating a correspondence between the generated retrieval key and the detected changed point;
a selecting step of selecting the generated retrieval key;
a retrieving step of retrieving a changed point of the changed portion corresponding to the selected retrieval key based on the set retrieval data; and
a reproducing step of reproducing the contents data using the retrieved changed point as a starting point.

9. An information record medium having an image processing program recorded thereon to be readable by a computer, **characterized in that** the image processing program causing the computer to function as:
an obtaining device which obtains contents data containing video data including main image data making progress with lapse of time and sub-image data which is superposed on the main image data and changes with progress of the main image data;
an extraction device which extracts the sub-image data from the video data;
a detection device which detects a changed portion of the extracted sub-image data and a changed point of the changed portion;
a generation device which generates a retrieval key using an image of the detected changed portion; and
a setting device which sets retrieval data indicating a correspondence between the generated retrieval key and the detected changed point.

10. An information record medium having an image processing program recorded thereon to be readable by a computer, **characterized in that** the image processing program causing the computer to function as:
an obtaining device which obtains contents data containing video data including main image data making progress with lapse of time and sub-image data which is superposed on the main image data and changes with progress of the main image data;
a setting device which sets retrieval data indicating a correspondence between a retrieval key generated using an image of a changed portion of the sub-image data and a changed point of the changed portion of the sub-image data;
a selection device which selects the generated retrieval key;
a retrieval device which retrieves a changed point of the changed portion corresponding to the selected retrieval key based on the set retrieval data; and
a reproduction device which reproduces the contents data using the retrieved changed point as a starting point.

11. An information record medium having an image processing program recorded thereon to be readable by a computer, **characterized in that** the image processing program causing the computer to function as:
an obtaining device which obtains contents data containing video data including main image data making progress with lapse of time and sub-image data which is superposed on the main image data and changes with progress of the main image data;
an extraction device which extracts the sub-image data from the video data;
a detection device which detects a changed portion of the extracted sub-image data and a changed point of the changed portion;
a generation device which generates a retrieval key using an image of the detected changed portion;
a setting device which sets retrieval data indicating a correspondence between the generated retrieval key and the detected changed point;
a selection device which selects the generated retrieval key;
a retrieval device which retrieves a changed point of the changed portion corresponding to the selected retrieval key based on the set retrieval data; and
a reproduction device which reproduces the contents data using the retrieved changed point as a starting point.
